# EUROPEAN PATENT SPECIFICATION

(11) **EP 3 132 884 B1**
(45) Date of publication and mention of the grant of the patent: **11.12.2019**
(21) Application number: 15780338.8
(22) Date of filing: 07.04.2015
(51) Int. Cl.: B23K 26/323, B23K 26/21, H01M 2/20, B23K 26/244, B23K 103/10, B23K 103/12, B23K 103/18

(54) **JOINED BODY OF DISSIMILAR METALS**
VERBUNDENER KÖRPER AUS UNGLEICHEN METALLEN
CORPS ASSEMBLÉ CONSTITUÉ DE MÉTAUX DISSEMBLABLES

(30) Priority: 15.04.2014 JP 2014083277; 17.02.2015 JP 2015028157
(43) Date of publication of application: 22.02.2017
(73) Proprietor: Panasonic Intellectual Property Management Co., Ltd., Osaka-shi, Osaka 570-6207 (JP)
(72) Inventor: SHIOGA, Daisuke, Osaka 540-6207 (JP); TANAKA, Tomomi, Osaka 540-6207 (JP); FUNAMI, Koji, Osaka 540-6207 (JP)
(74) Representative: Vigand, Philippe
(86) International application number: PCT/JP2015/001939
(87) International publication number: WO 2015/159503

(56) References cited:
- WO-A1-2006/016441
- WO-A1-2006/016441
- WO-A1-2012/164839
- WO-A1-2012/164839
- JP-A- 2008 119 729
- JP-A- 2008 119 729

## Description

### TECHNICAL FIELD

The present invention relates to a dissimilar metal joined body formed by joining a copper-based material (hereinafter, a copper material) and an aluminum-based material (hereinafter, an aluminum material) by laser welding.

### BACKGROUND ART

Generally, a hard and brittle intermetallic compound is formed in a molten portion in the laser welding between dissimilar metals. Accordingly, the joint strength is largely reduced as compared with a case of welding between same kinds of metals and brittle fracture behavior is shown. As an example of practical use of the joined body of the copper material and the aluminum material, a joined body having the following structure is known.

### (1) A joined body having an insert structure using a clad material of the copper material and the aluminum material

The joined body is fabricated in the following manner. A clad material including a first metal member and a second metal member is arranged between a first metal and a second metal which are materials to be welded and have different melting points so that the same kind of metals contact each other. In this state, the first metal, the clad material and the second metal are integrated by laser welding from both surfaces of the first metal and the second metal in a welding condition in which dissimilar metals do not melt each other (for example, refer to Patent Literature 1).

### (2) A joined body having a spot-laser welding structure

The joined body is fabricated in the following manner. A first metal plate and a second metal plate having different melting points are partially overlapped. The overlapped portions are irradiated with laser discontinuously, thereby forming spot-like welding portions continuously (for example, refer to Patent Literature 2) .

### CITATION LIST

### PATENT LITERATURE

PTL 1: JP-A-4-081288
PTL 2: WO2006-016441

### SUMMARY

The present disclosure provides a dissimilar metal joined body of a copper material and an aluminum material in which the joint strength is increased to a base material strength.

A dissimilar metal joined body according to the present invention is composed of a copper material, an aluminum material and a molten mixed portion. The molten mixed portion is configured so that part of the aluminum material is melted and flows into the copper material. A depth from a surface of the copper material which contacts the aluminum material in the molten mixed portion is at least 5 µm and no greater than 30 µm.

In the combination of the copper material and the aluminum material, a hard and brittle metal compound is easily deposited. However, it is possible to increase the joint strength to the level in which fracture occurs in a base material part of the aluminum material having relatively low mechanical strength in the dissimilar metal joined body formed of the copper material and the aluminum material.

### BRIEF DESCRIPTION OF DRAWINGS

Fig. 1 is a view schematically showing a cross section of a joined portion according to the embodiment of the present invention.
Fig. 2 is a graph showing the relation between the input energy mount and the peel strength/the dimension of the molten mixed portion according to the embodiment of the present invention.

### DESCRIPTION OF EMBODIMENTS

Prior to the explanation of embodiments of the present invention, problems in a related-art apparatus will be briefly explained. In the joined body in Patent Literature 1, the clad material is necessary. A physical space for sandwiching the clad material is also necessary. Furthermore, it is necessary to emit laser beam from both sides of the welding materials to be welded. Therefore, the performance of the structure to be joined may be deteriorated, and it may be difficult to join the materials due to structural constraints.

For example, when the joined body in Patent Literature 1 is applied to a joint of a plate material (bus bar) connecting between cell electrodes in an in-vehicle battery module, the volume or mass is increased as a whole as the clad material is interposed between the bus bar and the cell electrode. Accordingly, the energy density as an important performance of the battery module is reduced. Furthermore, it is necessary to consider variations in thickness of the clad material in the laser welding in which the highly-precise positioning is necessary in the optical axis direction, which complicates production process.

A cell main body is arranged just below a contact part of the bus bar and the cell electrode to be joined. Therefore, the cell main body blocks the access of the laser beam to reverse faces of the bus bar and the cell electrode. Therefore, it is difficult to emit the laser beam from the reverse faces of the bus bar and the cell electrode.

The joined body in the Patent Literature 2 is characterized by suppressing alloying which causes increase of an electric resistance value by forming the spot-like welding portions by pulse waves rather than forming a linear welding portion by continuous irradiation of the laser beam. Therefore, the joint area is inevitably reduced and it is difficult to improve the joint strength to the base material strength.

Hereinafter, the present invention will be explained with reference to the drawings.

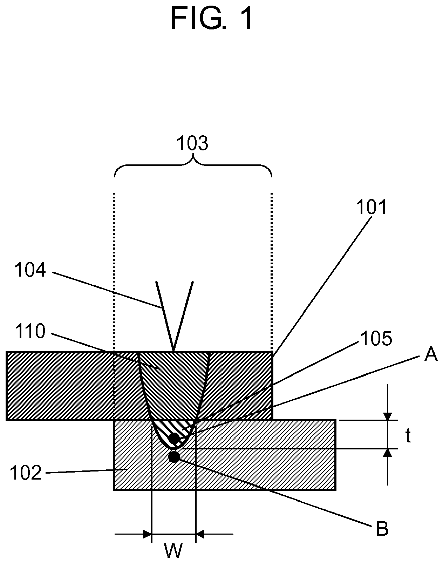

Fig. 1 is a view schematically showing a cross section of a joined portion according to the embodiment of the present invention.

An aluminum material 101 and a copper material 102 which are members to be joined are partially overlapped to thereby form an overlapping area 103 and welded by irradiating an arbitrary position in the overlapping area 103 with a laser beam 104. The laser beam 104 is emitted continuously from a surface of the aluminum material 101 having a relatively low melting point, which is the opposite side of a surface contacting the copper material 102, thereby forming a linear welding portion. Accordingly, a molten mixed portion 105 which is continuous in a scanning direction as well as having a width W and a depth "t" of a certain specific range is formed. The width W indicates the shortest dimension of the molten mixed portion 105 on a surface of the copper material 102 which contacts the aluminum material 101.

The aluminum material 101 irradiated with the laser beam is melted completely to the surface contacting the copper material 102 at the moment when the laser beam 104 is emitted. Therefore, a molten portion 110 connecting to the molten mixed portion 105 is formed in the surface of the aluminum material 101, which is opposite to the surface contacting the copper material 102.

The molten mixed portion 105 is formed so that the aluminum is melted and flows into the copper material 102 from the surface of the aluminum material 101 which contacts the copper material 102. The surface contacting the copper material 102 indicates the reverse surface of the aluminum material 101, which is opposite to the surface irradiated with the laser light 104. Various parameters such as the output, scanning speed and the energy density of the laser beam 104 are optimized so that the molten mixed portion 105 is formed. Then, the shape dimension of the molten mixed portion 105 determines the joint strength of the joined body.

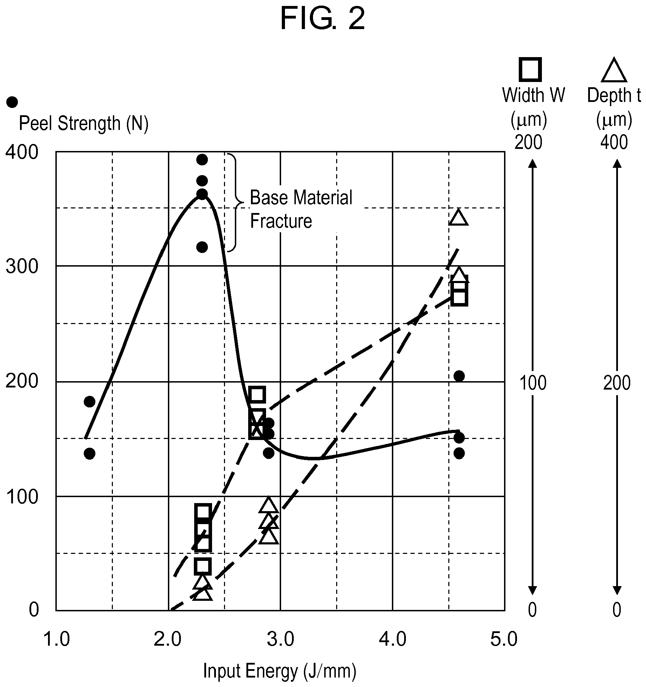

As an example of the embodiment, Fig. 2 shows the relation of the peel strength of the joint of the joined body, the width W and the depth "t" of the molten mixed portion 105 with respect to the input energy value when performing welding by using a fiber laser having higher light condensing performance in a range in which the laser output is 500 to 1100 W and the scanning speed is 240 to 720 mm/s.

When the molten mixed portion 105 is formed to have the same shape dimension, the necessary input energy value is changed according to the thickness of the aluminum material 101 irradiated with the laser beam 104. Therefore, the optimum value depending on the thickness of the aluminum material 101 exists in the input energy values in which the high joint strength can be obtained.

In the case where the same kinds of materials are joined, the joining strength is increased in proportion to the input energy amount. On the other hand, in the case where dissimilar materials are joined, the molten mixed amount is increased as the input energy amount is increased. Accordingly, the joint strength is extremely reduced as the deposition of an intermetallic compound is increased. Fig. 2 shows results obtained when the thickness of the aluminum material 101 is 0.6 mm as an example.

According to the results shown in Fig. 2, in the case where the thickness of the aluminum material 101 is 0.6 mm, the peel strength is 320 to 400 N when the input energy value is approximately 2.3 J/mm, and the base material is fractured when peeled. Accordingly, it is found that the joint strength of the joined portion has been improved to the base material strength level. The peel strength is the same level as the same metal joined body of aluminum materials. It has been checked that the same tendency is shown when the thickness of the copper material 102 is at least 1 mm and/or when the thickness of the aluminum material 101 is at least 0.5 mm and no greater than 0.8 mm.

The depth "t" of the molten mixed portion 105 in which the high joint strength as described above can be obtained is limited to a certain specific range, specifically the range of at least 5 µm and no greater than 30 µm. The width W is limited to a range of at least 10 µm and no greater than 50 µm.

The optimum range of the above width W is 20% to 30% of the case where the same materials are joined. Accordingly, the width W of the molten mixed portion 105, namely, the welding width can be narrowed. The input energy amount is extremely reduced as compared with the case where the same materials are welded as described above, thereby forming the molten mixed portion 105 as the welded portion to be thinner and shallower. Accordingly, the number of welding lines can be multiplied to three or four times. In this case, the joint strength can be further improved while maintaining the ductility performance.

It has been checked that the concentration of a copper component inside of the molten mixed portion 105, for example, at a place A is suppressed to be lower than 10%. On the other hand, it is checked that the concentration of an aluminum component in a region near the molten mixed portion 105 in the copper material 102, for example, at a place B is also suppressed to be lower than 10%. The deposition of the intermetallic compound is suppressed to a small amount as described above. It can be considered that brittle fracture behavior does not occur and a ductility fracture mode is obtained as the deposition of the intermetallic compound is suppressed to a small amount (plastic deformation of the base material appears) .

It is preferable that the surface of the copper material 102 is covered with Ni plating. Specifically, it has been checked that the copper material 102 covered with Ni plating is partially overlapped with the aluminum material 101 and irradiated and welded with the laser beam 104 as described above to thereby form a stronger joint.

The dissimilar metal joined body according to the invention is composed of the copper material 102, the aluminum material 101 and the molten mixed portion 105. The molten mixed portion 105 is configured so that part of the aluminum material 101 is melted and flows into the copper material 102. The depth from the surface of the copper material 102 contacting the aluminum material 101 in the molten mixed portion 105 is at least 5 µm and no greater than 30 µm. According to the configuration, it is possible to increase the joint strength to the level in which fracture occurs in the base material part of the aluminum material 101 which has relatively low mechanical strength.

### INDUSTRIAL APPLICABILITY

The dissimilar metal joined body according to the present invention can be applied to the connection between the bus bar connecting between terminals of a battery and an individual electrode terminal. Especially in the in-vehicle secondary battery and so on, an expensive clad-material bus bar formed of the copper material and the aluminum material is used for connecting between electrode terminals, and the structure formed of only the joined body of the same kind of materials is adopted. However, it is possible to connect between any terminals only by the inexpensive aluminum material by the dissimilar joined body according to the present invention. Accordingly, great economic effects can be expected.

### REFERENCE SIGNS LIST

- 101: aluminum material
- 102: copper material
- 103: overlapping area
- 104: laser beam
- 105: molten mixed portion
- 110: molten portion

## Claims

1. A dissimilar metal joined body comprising:
a first plate (102) made out of a copper material;
a second plate (101) made out of an aluminum material; and
a molten mixed portion (105) containing the copper material into which part of the aluminum material is melted,
wherein the molten mixed portion (105) is formed continuously and linearly on a surface of the first plate (102) made out of copper material which contacts the second plate (101) made out of aluminum material, the concentration of the copper component inside the molten mixed portion (105) is lower than 10% and the concentration of the aluminum component in the vicinity of the molten mixed portion (105) in the first plate (102) made out of copper material is lower than 10%
**characterised in that** the molten mixed portion (105) has a depth (t) from the surface of the first plate (102) made out of copper material which contacts the second plate (101) made out of aluminum material that is at least 5 µm and no greater than 30 µm,
and a shortest dimension (W) of the molten mixed portion (105) is at least 10 µm and no greater than 50 µm on the surface of the first plate (102) made out of copper material which contacts the second plate (101) made out of aluminum material.

2. The dissimilar metal joined body according to claim 1, wherein the thickness of the first plate (102) made out of copper material is at least 1 mm.

3. The dissimilar metal joined body according to claim 1, wherein; the thickness of the second plate (101) made out of aluminum material is at least 0.5 mm and no greater than 0.8 mm.

4. The dissimilar metal joined body according to claim 1, wherein the first plate (102) made out of copper material is covered with Ni plating.

5. The dissimilar metal joined body according to claim 1,
wherein the dissimilar metal joined body is configured as a terminal connection in an in-vehicle secondary battery.

## Patentansprüche

1. Körper, vereint aus unterschiedlichen Metallen, umfassend:
eine erste Platte (102), die aus einem Kupfermaterial hergestellt ist;
eine zweite Platte (101), die aus einem Aluminiummaterial hergestellt ist; und
einen geschmolzenen gemischten Teil (105), der das Kupfermaterial enthält, in welches ein Teil des Aluminiummaterials eingeschmolzen ist,
wobei der geschmolzene gemischte Teil (105) kontinuierlich und linear auf einer Fläche der ersten Platte (102) hergestellt wird, die aus Kupfermaterial hergestellt ist, welches die zweite Platte (101) kontaktiert, die aus Aluminiummaterial hergestellt ist,
die Konzentration der Kupferkomponente im geschmolzenen gemischten Teil (105) ist kleiner als 10 %, und die Konzentration der Aluminiumkomponente in der Nähe des geschmolzenen gemischten Teils (105) in der ersten Platte (102), die aus Kupfermaterial hergestellt ist, beträgt weniger als 10 %,
**dadurch gekennzeichnet, dass**
der geschmolzene gemischte Teil (105) eine Tiefe (t) von der Oberfläche der ersten Platte (102) aus hat, die aus Kupfermaterial hergestellt ist, welches die zweite Platte (101) kontaktiert, die aus Aluminiummaterial hergestellt ist, die mindestens 5 µm und nicht mehr als 30 µm beträgt,
und eine geringste Abmessung (W) des geschmolzenen gemischten Teils (105) beträgt mindestens 10 µm und nicht mehr als 50 µm auf der Oberfläche der ersten Platte (102), die aus Kupfermaterial hergestellt ist, welches die zweite Platte (101) kontaktiert, die aus Aluminiummaterial hergestellt ist.

2. Körper, vereint aus unterschiedlichen Metallen, nach Anspruch 1, wobei die Dicke der ersten Platte (102), die aus Kupfermaterial hergestellt ist, mindestens 1 mm beträgt.

3. Körper, vereint aus unterschiedlichen Metallen, nach Anspruch 1, wobei die Dicke der zweiten Platte (101), die aus Aluminiummaterial hergestellt ist, mindestens 0,5 mm und nicht mehr als 0,8 mm beträgt.

4. Körper, vereint aus unterschiedlichen Metallen, nach Anspruch 1, wobei die erste Platte (102), die aus Kupfermaterial hergestellt ist, mit einer Nickelplattierung bedeckt ist.

5. Körper, vereint aus unterschiedlichen Metallen, nach Anspruch 1, wobei der Körper, der aus unterschiedlichen Materialien vereint ist, als Anschlussverbindung in einem sekundär Akkumulator in einem Fahrzeug ausgelegt ist.

## Revendications

1. Corps assemblé de métaux dissemblables comprenant :
une première plaque (102) faite d'un matériau en cuivre ;
une deuxième plaque (101) faite d'un matériau en aluminium ; et
une partie mélangée fondue (105) contenant le matériau en cuivre dans lequel une partie du matériau en aluminium est fondue,
dans lequel la partie mélangée fondue (105) est formée en continu et linéairement sur une surface de la première plaque (102) faite d'un matériau en cuivre qui est en contact avec la deuxième plaque (101) faite d'un matériau en aluminium,
la concentration du composant en cuivre à l'intérieur de la partie mélangée fondue (105) est inférieure à 10 % et la concentration du composant en aluminium au voisinage de la partie mélangée fondue (105) dans la première plaque (102) faite d'un matériau en cuivre est inférieure à 10 %,
**caractérisé en ce que**
la partie mélangée fondue (105) a une profondeur (t) depuis la surface de la première plaque (102) faite d'un matériau en cuivre qui est en contact avec la deuxième plaque (101) faite d'un matériau en aluminium qui est d'au moins 5 µm et d'au plus 30 µm,
et la dimension la plus petite (W) de la partie mélangée fondue (105) est d'au moins 10 µm et d'au plus 50 µm sur la surface de la première plaque (102) faite d'un matériau en cuivre qui est en contact avec la deuxième plaque (101) faite d'un matériau en aluminium.

2. Corps assemblé de métaux dissemblables selon la revendication 1, dans lequel l'épaisseur de la première plaque (102) faite d'un matériau en cuivre est d'au moins 1 mm.

3. Corps assemblé de métaux dissemblables selon la revendication 1, dans lequel l'épaisseur de la deuxième plaque (101) faite d'un matériau en aluminium est d'au moins 0,5 mm et d'au plus 0,8 mm.

4. Corps assemblé de métaux dissemblables selon la revendication 1, dans lequel la première plaque (102) faite d'un matériau en cuivre est recouverte d'un placage en Ni.

5. Corps assemblé de métaux dissemblables selon la revendication 1, lequel corps assemblé de matériaux dissemblables est configuré comme un raccordement de bornes dans une batterie secondaire embarquée dans un véhicule.
